# EUROPEAN PATENT SPECIFICATION

(11) **EP 1 970 603 B1**
(45) Date of publication and mention of the grant of the patent: **21.07.2010**
(21) Application number: 07005326.9
(22) Date of filing: 14.03.2007
(51) Int. Cl.: F16H 61/36, F16H 59/02, F16C 1/14, F16F 3/10, F16F 15/08

(54) **Gear shift apparatus**
Gangschaltvorrichtung
Dispositif de changement de vitesses

(43) Date of publication of application: 17.09.2008
(73) Proprietor: GM Global Technology Operations, Inc., Detroit, MI 48265-3000 (US)
(72) Inventor: Burger, Hans-Jürgen, 64569 Nauheim (DE); Geiberger, Axel, 55116 Mainz (DE); Hahn, Thorsten, 55239 Gau-Odernheim (DE); Mohlin, Mikael, 442 33 Kungälv (SE); Pfaff, Udo, 65830 Kriftel (DE)
(74) Representative: Strauss, Peter

(56) References cited:
- JP-A- 10 089 343
- US-A- 4 077 275
- US-A- 5 692 992
- US-B2- 6 810 768

## Description

The present invention relates to a gear shift apparatus comprising a resilient shifting force transmitting device , in particular for transmitting a shifting force between a gear shift lever operated by the driver and a gearbox in a motor vehicle.

EP 1 482 213 A1 discloses a shifting force transmitting device of this type, which is made resilient in order to prevent vibrations of the gearbox from being transmitted to the gear shift lever or at least to attenuate such vibrations.

There is a problem with such resilient shifting force transmitting devices in that due to a possible deformation of the device, there is no strict one-to-one relation between the position of the gear shift lever, on the one hand, and of components of the gearbox which should be controlled by said lever, on the other hand. If the transmitting device is easily deformed, it is difficult for the driver to feel whether the gearbox has indeed reached a desired configuration. Further, since the range of displacement of the gear shift lever is usually limited, so is the deformation which can be applied, and accordingly, so is the maximum force it can transmit to the gearbox. I.e., if shifting in the gearbox is tight, it may be difficult to apply the shifting force necessary for reaching a desired configuration.

EP 1 482 213 A1 seeks to solve this problem by providing a shifting force transmitting device having a spring rate which is variable according to the amount of deformation, namely which has a low spring rate at low deformation and a high spring rate at high deformation. In this way, since the amplitude of vibrations of the gearbox is small, they can only cause a small deformation of the transmitting device, and, hence, only a low force is transmitted to the gear shift lever. By a shifting movement of the gear shift lever, having a large amplitude, a reasonably high shifting force can be applied to the gearbox.

However, since the spring rate is low at small deformations, it is still difficult for the driver to control the shifting movements in the gearbox precisely. On the other hand, strong and rapidly fluctuating forces which are likely to occur in the shifting apparatus in a phase of the shifting process in which gearwheels of a newly selected gear are beginning to lock in the gearbox are strongly felt by the driver, giving him the impression that the gearbox is recalcitrant.

US 5 692 992 discloses a gear shift apparatus according to the preamble of claim 1. This apparatus is intended for controlling a reversing transmission of a marine drive. It comprises a resilient shifting force transmitting device, deformation of which is detected by a sensor. If the amount of deformation detected suggests that a user intends to reverse the transmission, engine ignition of the drive is interrupted, so as to reduce the torque applied to the transmission and to facilitate the reversing operation.

The object of the present invention is to provide a gear shift apparatus which allows the driver of a motor vehicle to keep precise control of a shifting movement in the gearbox while preventing him from feeling undesirable force fluctuations during the shifting process.

This object is achieved by a gear shift apparatus as defined in claim 1. The inventors found that the force a driver applies at the shift lever of a gear shift apparatus is variable according to the phase of the shifting process, and that it is highest during a synchronizing phase of the shifting process and the subsequent engagement phase in which a synchronizer sleeve enters the engagement ring of a mating gear, which is also the phase in which the above-mentioned force fluctuations are likely to occur. By designing the force transmitting device of the gear shift apparatus to have a low spring rate in a force range corresponding to these phases of the shifting process, the driver can be prevented from feeling the fluctuations, whereas when the force applied by the driver is low, at the beginning and the end of the shifting process, the device provides a rather rigid coupling between the gear shift lever and the gearbox, enabling a precise control.

Generally speaking the second deformation is a fraction of a millimetre, preferably at least 0.1 mm.

The first spring rate should be at least twice at high as the second spring rate.

At a third deformation higher than the second one, the device may have a third spring rate which is higher than the second spring rate, in order to enable a high shifting force to be transmitted.

In that case, the spring rate must have a minimum somewhere between the first and the third deformations. Preferably, this minimum is in a deformation range of one to three millimetres.

The leaf spring of the shifting device, when operated under compression, has a highly nonlinear spring rate which decreases with increasing compression of the spring.

In order to prevent permanent deformation of the leaf spring under an excessive shifting force, the device may further comprise an auxiliary spring element connected to a first one of the end portions of the leaf spring and an abutment connected to the other end portion of the leaf spring, the auxiliary spring coming into contact with the abutment when the leaf spring is deformed beyond a threshold. This auxiliary spring may e.g. be a solid body of resilient material.

Further, the shifting force transmitting device may comprise an outer casing, a central engaging portion for engaging a shift lever of the gearbox, and at least two of said leaf springs arranged between the engaging portion and the casing so as to transmit push and pull shifting forces between said casing and said engaging portion.

The gear shift lever and the shifting force transmitting device are preferably connected by a push-pull cable.

The gear shift lever is preferably designed such that if a lever force applied is less than 10N the transmitting device has said first deformation, and if a lever force of more than 20N is applied it has said second deformation

Further features and advantages of the invention will become apparent from the subsequent description of embodiments referring to the appended drawings.
- Fig. 1: is a perspective view of an embodiment of the shifting force transmitting device;
- Fig. 2: is a cross section of the device in an equilibrium state; and
- Fig. 3: is a cross section of the device in a stressed, deformed state; and
- Fig. 4: is a force-deformation characteristic of the device.
- Fig. 5: is a perspective view of a gear shift apparatus comprising two of the shifting force transmitting devices; and
- Fig. 6: illustrates the force applied by a driver to the gear shift lever of the apparatus of Fig. 5 in a gear shifting process.

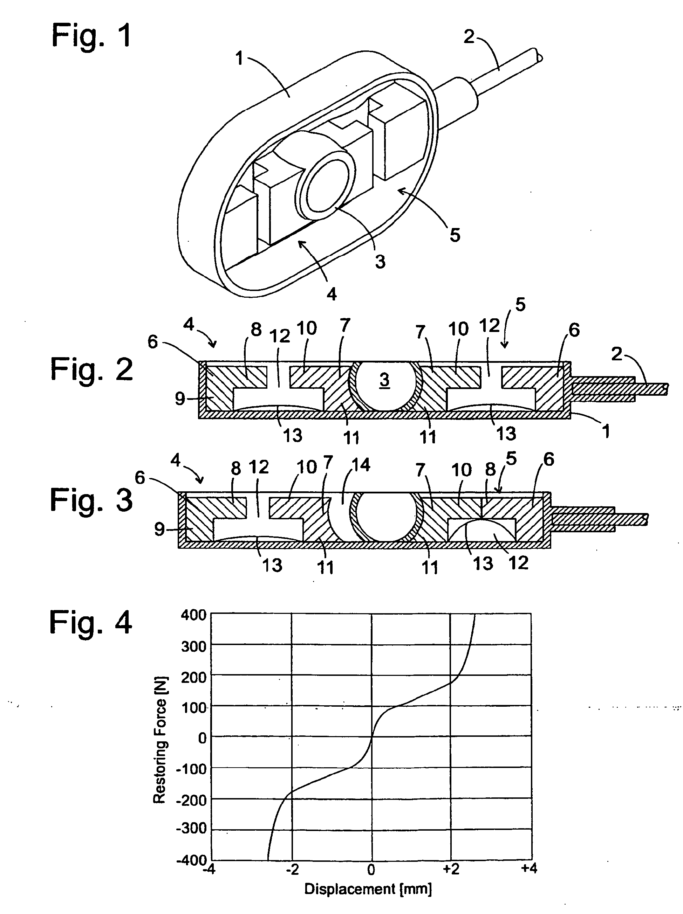

Fig. 1 is a perspective view of a device for resiliently transmitting operating forces between a driver-operated gear shift lever, on the one hand, and a control lever mounted on a gearbox in a motor vehicle, on the other hand. The device has an elongate outer casing 1 from which protrudes a push-pull rod 2. The push-pull rod 2 is connected to the gear shift lever via a cable guided in a flexible but incompressible tube, according to a design familiar to the man of the art. In the centre of the casing 1, there is receptacle 3 for engaging a spherical knob of the control lever of the gearbox. The receptacle 3 is displaceable in the longitudinal direction of the casing 1. To this effect, it is held between two spring assemblies 4, 5, each of which comprises two L-shaped rubber blocks 6, 7 and a leaf spring 13.

As is best seen in Fig. 2, in each spring assembly 4, 5, the rubber blocks 6, 7 have mutually orthogonal branches 8, 9 and 10, 11, respectively. In a relaxed configuration of the device, as shown in Fig. 2, branch 9 is in contact with a peripheral wall of casing 1, branch 11 is in contact with receptacle 3, and branches 8, 10 face each other, so that between the two rubber blocks 6, 7, a T-shaped space 12 is formed. In a portion of this space 12 corresponding to the cross bar of the T, the slightly curved leaf spring 13 extends between the two rubber blocks 6, 7.

If a pushing force is applied to the casing 1 by push-pull rod 2, the casing 1 is displaced with respect to the receptacle 3, as shown in the cross section of Fig. 3. Since in the configuration of Fig. 2 the leaf springs 13 of the two assemblies 4, 5 are practically unstressed, the spring assembly 4 opposite to push-pull rod 2 does not expand noticeably, and a gap 14 forms between branch 11 and receptacle 3. On the other hand, the spring assembly 5 between receptacle 3 and push-pull rod 2 is compressed, whereby the curvature of its leaf spring 13 is increased. It is easily seen that in a configuration where the curvature of the leaf spring 13 is small, the curvature increases strongly when the assembly is compressed by a given amount, and that the increase of curvature becomes the smaller, the greater the curvature is. In other words, the derivative of the curvature of spring 13 with respect to the length of assembly 4, 5 is negative, and its amount decreases with decreasing length. This causes the spring assembly 4 to exhibit a strongly nonlinear spring rate: the spring rate is highest when the leaf spring 13 is in the unstressed configuration of Fig. 2, and it becomes the smaller the more the spring assembly 4 is compressed. Only when the facing branches 8, 10 of the rubber blocks 6, 7 come into contact and begin to be deformed, the spring rate of assembly 4 increases steeply again.

Spring assembly 4 exhibits the same behaviour in case of the push-pull rod 2 transmitting a pulling force. In this way, a spring force-displacement characteristic as shown in the graph of Fig. 4 is obtained. Zero displacement corresponds to the equilibrium position of Fig. 2. The ordinate is representative of the restoring force effective between the casing 1 and the receptacle 3. There is a range of approximately +/- 0.2 mm width around the equilibrium position in which the device is rather rigid, exhibiting a spring rate of up to approximately 200 N/mm. When the displacement increases, the rigidity becomes less, and in the displacement range of approximately 0.5 to 2 mm it reaches a minimum of approximately 50 N/mm. At a displacement of 2 mm, corresponding to the rubber blocks 6, 7, of one of the spring assemblies 4, 5, coming into contact with each other, the rigidity increases strongly again, so that at a displacement of more than 2 mm, the spring rate is noticeably higher than around equilibrium position.

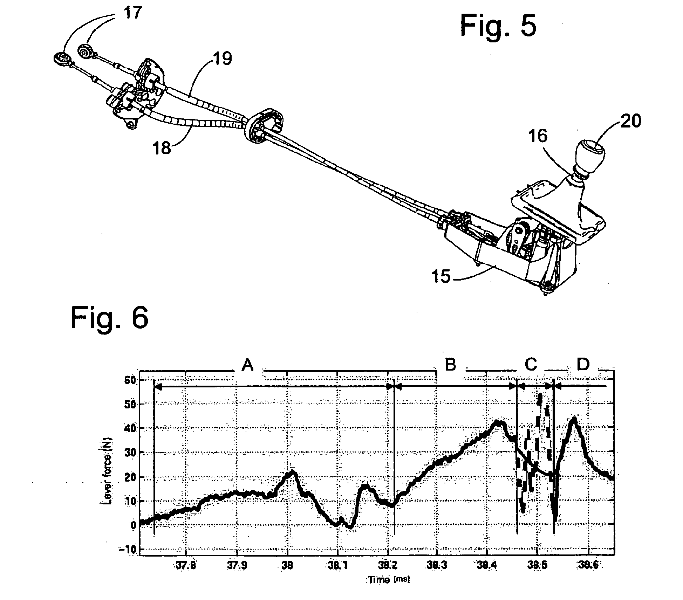

Fig. 5 is a perspective view of a gear shift apparatus according to the present invention. It comprises a base 15 for mounting on a transmission tunnel of a motor vehicle in which a gear shift lever 16 is mounted with two rotational degrees of freedom. Within the base, a spring-loaded detent mechanism is provided which defines a neutral position and several engaged positions corresponding to different gear ratios of a conventional gearbox, not shown, which is controlled by the apparatus. The possible paths of movement of the gear shift lever are conventionally defined by a mask in which a pattern of slots is formed, through which the gear shift lever 15 extends. The pattern comprises a neutral slot and several engagement slots extending orthogonally from the neutral slot, their ends corresponding to the above-mentioned engaged positions. The detent mechanism, being familiar to the man of the art, is not represented in detail in the Fig.

Two of the above-described force-transmitting devices 17 are connected to gear shift lever 16 by push-pull wires guided in incompressible tubes 18, 19. One of the devices 17 transmits a rotation of the lever 16 in the neutral slot, the other transmits a rotation along the engagement slots. The receptacles of the devices 17 are for engaging operating knobs of the gearbox. The gear shift lever 16 has a reduction rate of approx. 2:1 to 4:1, i.e. a displacement of the handle 20 at the free end of lever 16 of 1 cm corresponds to a displacement of 0.5 to 0.25 cm of the casing 1 of one of the devices 17.

Fig. 6 illustrates the development of the force a driver applies to the gear shift lever 16 in a gear shifting process. In a first phase labelled A in the Fig., the driver overcomes a resistance of the above-mentioned detent mechanism when turning the gear shift lever 16 away from an engaged position and into neutral position. When the lever 16 has reached the neutral slot, near 38.1 ms in Fig. 6, it can move in the neutral slot practically without resistance. When re-entering an engagement slot, between 38.1 and 38.2 ms, resistance of the detent mechanism makes itself felt again. The resistance of the detent mechanism does not exceed 25N applied to the handle 20, corresponding to a force of not more than 75 N at the force transmitting devices 17 if a reduction of 3:1 by the gear shift lever 16 is assumed. As can be seen in Fig. 4, the spring rate of the devices 17 is high at such a force, and the deformation of the devices is small, so that shifting movements driven in the gearbox via the transmitting devices 17 are closely coupled to the position of lever 16 and can be felt precisely by the driver.

In phase B of Fig. 6, synchronization of the gears occurs in the gearbox. Now the force at the handle 20 increases above 25 N, its peak depending on the speed at which the driver moves the handle 20. In the graph, an exemplary peak value of approx. 40 N is shown, typical values being in a range of 40 to 80 N. Taking account of the reduction rate of gear shift lever 16, this corresponds to a force of approx. 120 N applied to the transmitting device 17. I.e. in phase B the transmitting device reaches a deformation state in which it is rather soft.

When the gears have been synchronized in the gearbox, they are brought into engagement in phase C of Fig. 6. This involves a momentary interruption of traction forces, which may induce a certain loss of synchronization. The gears will then not engage smoothly, causing the shifting force transmitted to the gears by the transmission device 17 to vary wildly, as indicated by a dashed line in Fig. 6, which in a conventional, rigidly coupled gear shifting apparatus would give the driver the unpleasant sensation of a poor shift. However, since the spring rate of the devices 17 is soft at such forces, the driver does not feel the strong oscillations, but rather a low-pass filtered force as illustrated by the solid curve in phase C. I.e. what the driver feels is a smooth shift.

As pointed out above, the shifting force can easily exceed 40N if the driver shifts quickly. If the maximum force applied by the driver is e.g. 80 N, the force acting on the transmission device amounts to approx. 250N. In this range, as shown in Fig. 4, the spring rate is high again. Therefore, the deformation of the transmitting device - and, accordingly, the deviation between the shift lever position and the state of the gearbox - does not grow to an impractical extent under a high shifting force, and a high shifting force can be applied to the gearbox if necessary even when the shift lever reaches an abutment at the end of one of the engagement slots into which it was moved by the driver.

### List of reference signs

casing 1
push-pull rod 2
receptacle 3
spring assembly 4, 5
rubber block 6, 7
branch 8, 9, 10, 11
space 12
leaf spring 13
gap 14

## Claims

1. A gear shift apparatus comprising a gear shift lever (16) and at least one resilient shifting force transmitting device (17) operably connected to said gear shift lever (16), the shifting force transmitting device (17) having a first, high spring rate at a first, low deformation and a second, low spring rate at a second, high deformation, **characterized in that** the shifting force transmitting device (17) comprises a leaf spring (13) which has two end portions which are displaceable with respect to each other under the effect of a shifting force, and a central portion which is laterally offset with respect to a straight line extending between the two end portions.

2. The gear shift apparatus of claim 1, wherein the second deformation is at least 0.1 mm.

3. The gear shift apparatus of any of the preceding claims, wherein the first spring rate is at least twice the second spring rate.

4. The gear shift apparatus of any of the preceding claims, wherein at a third deformation higher than the second one, the device has a third spring rate higher than the second spring rate.

5. The gear shift apparatus of claim 4, wherein the spring rate is at a minimum in a deformation range of 1 to 3 mm.

6. The gear shift apparatus of any of the preceding claims, wherein the shifting force transmitting device (17) further comprises an auxiliary spring element (8; 10) connected to a first one of the end portions of the leaf spring (13) and an abutment (10; 8) connected to the other end portion of the leaf spring (13), the auxiliary spring (8; 10) coming into contact with the abutment (10; 8) when the leaf spring (13) is deformed beyond a threshold.

7. The gear shift apparatus of any of the preceding claims, wherein the shifting force transmitting device (17) has an outer casing (1), a central engaging portion (3) for engaging a control lever of a gearbox, and at least two of said leaf springs (13) arranged between the engaging portion (3) and the casing (1) so as to transmit push and pull shifting forces between said casing (1) and said engaging portion (3).

8. The gear shift apparatus of any of the preceding claims, wherein the gear shift lever and the shifting force transmitting device are connected by a push-pull cable.

9. The gear shift apparatus of any of the preceding claims, wherein at a lever force applied to the gear shift lever of less than 10N the transmitting device has said first deformation and at a lever force of more than 20N it has said second deformation.

## Patentansprüche

1. Gangschaltvorrichtung, die einen Gangschalthebel (16) und mindestens eine mit dem Gangschalthebel (16) in Wirkverbindung stehende, elastische Schaltkraftübertragungsvorrichtung (17), wobei die Schaltkraftübertragungsvorrichtung (17) bei einer ersten, geringen Verformung eine erste, hohe Federkonstante und bei einer zweiten, hohen Verformung eine zweite, geringe Federkonstante aufweist, **dadurch gekennzeichnet, dass** die Schaltkraftübertragungsvorrichtung (17) eine Blattfeder (13) umfasst, die zwei Endabschnitte besitzt, welche zueinander unter Einwirkung einer Schaltkraft beweglich sind, und einen Mittelabschnitt, der im Verhältnis zu einer geraden Linie, die sich zwischen den zwei Endabschnitten erstreckt, seitlich versetzt ist.

2. Gangschaltvorrichtung gemäß Anspruch 1, wobei die zweite Verformung mindestens 0,1 mm beträgt.

3. Gangschaltvorrichtung gemäß einem der vorangehenden Ansprüche, wobei die erste Federkonstante mindestens zweimal der zweiten Federkonstante entspricht.

4. Gangschaltvorrichtung gemäß einem der vorangehenden Ansprüche, wobei bei einer dritten Verformung, die größer ist als die zweite, die Vorrichtung eine dritte Federkonstante aufweist, die höher ist als die zweite Federkonstante.

5. Gangschaltvorrichtung gemäß Anspruch 4, wobei die Federkonstante mindestens in einem Verformungsbereich von 1 bis 3 mm liegt.

6. Gangschaltvorrichtung gemäß einem der vorangehenden Ansprüche, wobei die Schaltkraftübertragungsvorrichtung (17) ferner ein Zusatzfederelement (8; 10) umfasst, das mit einem ersten Endabschnitt der Blattfeder (13) verbunden ist, und ein Widerlager (10; 8), das mit dem anderen Endabschnitt der Blattfeder (13) verbunden ist, wobei die Zusatzfeder (8; 10) mit dem Widerlager (10; 8) in Kontakt kommt, wenn die Blattfeder (13) über einen Schwellwert hinaus verformt wird.

7. Gangschaltvorrichtung gemäß einem der vorangehenden Ansprüche, wobei die Schaltkraftübertragungsvorrichtung (17) ein Außengehäuse (1), einen mittleren Eingriffabschnitt (3) zur Verbindung mit einem Kontrollhebel eines Schaltgetriebes und mindestens zwei der Blattfedern (13) aufweist, die zwischen dem Eingriffabschnitt (3) und dem Gehäuse (1) angeordnet sind, um Druck- und Zugschaltkräfte zwischen dem Gehäuse (1) und dem Eingriffabschnitt (3) zu übertragen.

8. Gangschaltvorrichtung gemäß einem der vorangehenden Ansprüche, wobei der Gangschalthebel und die Schaltkraftübertragungsvorrichtung durch ein Druck-Zug-Kabel verbunden sind.

9. Gangschaltvorrichtung gemäß einem der vorangehenden Ansprüche, wobei bei einer auf den Gangschalthebel aufgebrachten Hebelkraft von weniger als 10N die Übertragungsvorrichtung die erste Verformung aufweist und bei einer Hebelkraft von mehr als 20N die zweite Verformung aufweist.

## Revendications

1. Appareillage de changement de vitesses comprenant un levier de vitesses (16) et au moins un dispositif élastique de transmission des forces de changement de vitesses (17) en liaison opérationnelle avec ledit levier de vitesses (16), le dispositif de transmission des forces de changement de vitesses (17) ayant un premier niveau d'élasticité élevé à une première déformation faible et un deuxième niveau d'élasticité bas à une deuxième déformation importante, **caractérisé en ce que** le dispositif de transmission des forces de changement de vitesses (17) comprend un ressort à lames (13) comportant deux parties d'extrémité qui peuvent être déplacées l'une par rapport à l'autre sous l'effet d'une force de changement de vitesses, et une partie centrale qui est décalée latéralement par rapport à une ligne droite qui s'étend entre les deux parties d'extrémité.

2. Appareillage de changement de vitesses selon la revendication 1, dans lequel la deuxième déformation est d'au moins 0,1 mm.

3. Appareillage de changement de vitesses selon l'une quelconque des revendications précédentes, dans lequel le premier niveau d'élasticité est au moins deux fois plus élevé que le deuxième niveau d'élasticité.

4. Appareillage de changement de vitesses selon l'une quelconque des revendications précédentes, dans lequel, à une troisième déformation plus importante que la deuxième, le dispositif a un troisième niveau d'élasticité supérieur au deuxième niveau d'élasticité.

5. Appareillage de changement de vitesses selon la revendication 4, dans lequel le niveau d'élasticité est au minimum dans une plage de déformation de 1 à 3 mm.

6. Appareillage de changement de vitesses selon l'une quelconque des revendications précédentes, dans lequel le dispositif de transmission des forces de changement de vitesses (17) comprend en outre un élément de ressort auxiliaire (8 ; 10) raccordé à une première des parties d'extrémité du ressort à lames (13) et une butée (10 ; 8) raccordée à l'autre partie d'extrémité du ressort à lames (13), le ressort auxiliaire (8 ; 10) venant en contact avec la butée (10 ; 8) quand le ressort à lames (13) est déformé au-delà d'un seuil.

7. Appareillage de changement de vitesses selon l'une quelconque des revendications précédentes, dans lequel le dispositif de transmission des forces de changement de vitesses (17) possède un carter extérieur (1), une partie d'engagement centrale (3) pour l'engagement d'un levier de commande d'une boîte de vitesses et au moins deux desdits ressorts à lames (13) disposés entre la partie d'engagement (3) et le carter (1) de façon à transmettre les forces de changement de vitesses en poussée et en traction entre ledit carter (1) et ladite partie d'engagement (3).

8. Appareillage de changement de vitesses selon l'une quelconque des revendications précédentes, dans lequel le levier de vitesses et le dispositif de transmission des forces de changement de vitesses sont reliés par un câble de traction et de poussée.

9. Appareillage de changement de vitesses selon l'une quelconque des revendications précédentes, dans lequel, à une force exercée sur le levier de vitesses de moins de 10 N, le dispositif de transmission a ladite première déformation, et à une force sur le levier de plus de 20 N, il a ladite deuxième déformation.
